# EUROPEAN PATENT APPLICATION

(11) **EP 4 604 311 A1**
(43) Date of publication of application: **20.08.2025**
(21) Application number: 23929741.9
(22) Date of filing: 18.07.2023
(51) Int. Cl.: H01M 50/593, H01M 50/20, H01M 50/50

(54) **BATTERY MODULE, BATTERY AND ELECTRIC DEVICE**

(30) Priority: 29.03.2023 CN 202320646881 U
(71) Applicant: Contemporary Amperex Technology (Hong Kong) Limited, Hong Kong (HK)
(72) Inventor: ZHU, Yanlin, Ningde, Fujian 352100 (CN); CAI, Wanli, Ningde, Fujian 352100 (CN)
(74) Representative: Thoma, Michael
(86) International application number: PCT/CN2023/107994
(87) International publication number: WO 2024/198164

(57) **Abstract**

Embodiments of this application provide a battery module, a battery, and a power consuming device. The battery module includes a battery cell group, a bracket, a binding member, and an electrical connecting member. The battery cell group includes a plurality of battery cells arranged in a first direction. Each of the battery cells includes electrode terminals. The bracket is located on a side of the battery cell group on which the electrode terminals are arranged. A first groove extending in the first direction is provided in the bracket, and a length direction of the bracket is parallel to the first direction. The electrical connecting member is at least partially received in the first groove. First through holes are provided in a bottom wall of the first groove, and the binding member passes through the first through holes and binds and fixes the electrical connecting member to the bracket. The space utilization inside the battery module provided in this application is high, thereby helping improve the energy density of the battery.

## Description

### CROSS-REFERENCE TO RELATED APPLICATIONS

This application claims priority to Chinese Patent Application (No. 202320646881.9), entitled "BATTERY MODULE, BATTERY, AND POWER CONSUMING DEVICE" and filed on March 29, 2023, which is incorporated herein by reference in its entirety.

### TECHNICAL FIELD

This application relates to the field of battery technologies, and in particular, to a battery module, a battery, and a power consuming device.

### BACKGROUND

Lithium batteries have characteristics such as high safety, good cycle performance, no pollution, and relatively low raw material costs, and have been widely used in electric automobiles. With the growing demand of the current market for lithium batteries and continuous development of lithium battery technologies, lithium battery design is increasingly focused on high specific energy design. Space inside a battery module becomes increasingly compact as energy density improves. Therefore, how to improve the energy density of a battery becomes a challenge in battery manufacturing.

### SUMMARY

Embodiments of this application provide a battery module, a battery, and a power consuming device, which can improve the space utilization inside the battery module, thereby improving the energy density of the battery.

According to a first aspect, an embodiment of this application provides a battery module. The battery module includes a battery cell group, a bracket, a binding member, and an electrical connecting member. The battery cell group includes a plurality of battery cells arranged in a first direction. Each of the battery cells includes electrode terminals. The bracket is located on a side of the battery cell group on which the electrode terminals are arranged. A first groove extending in the first direction is provided in the bracket, and a length direction of the bracket is parallel to the first direction. The electrical connecting member is at least partially received in the first groove. First through holes are provided in a bottom wall of the first groove, and the binding member passes through the first through holes and binds and fixes the electrical connecting member to the bracket.

In the foregoing technical solution, the bracket receives the electrical connecting member on the side of the battery cell on which the electrode terminals are arranged, so that impact on external envelope dimensions of the battery module in other directions can be reduced. In addition, the electrical connecting member is received in the first groove, so that the space occupation of the bracket inside the battery module can be reduced, and the electrical connecting member inside the battery module can be protected and supported when the external envelope dimensions of the battery module are limited. In this way, the space utilization inside the battery module is improved, and a proportion of the battery cell per unit volume is increased, thereby improving the energy density of a battery using the battery module.

In addition, the binding member passes through the first through holes and binds the electrical connecting member to the bottom wall, so that a possibility of damage to the electrical connecting member can be further reduced.

Optionally, the first groove is provided on a side of the bracket facing away from the battery cell group.

In the foregoing technical solution, the first groove is provided on the side of the bracket facing away from the battery cell group, and the bottom wall of the first groove is configured to support the electrical connecting member in a direction facing away from the battery cell group, thereby reducing the possibility of damage to the electrical connection.

Optionally, the electrical connecting member extends in the first groove in the first direction.

In the foregoing technical solution, the electrical connecting member extends in the first groove in the first direction, so that the electrical connecting member fits snugly into the first groove, thereby improving the protection of the electrical connecting member by the bracket, and reducing the possibility of damage to the electrical connecting member.

Optionally, the first through holes are arranged in pairs, and the binding member passes through two first through holes arranged in a pair.

In the foregoing technical solution, the first through holes are arranged in pairs, so that the binding member can be positioned. In addition, a large number of holes are provided, so that the weight of the bracket can be reduced, thereby helping improve the energy density of the battery using the battery module.

Optionally, the battery module further includes a buffer member and a cover plate, the cover plate is located on the side of the battery cell group on which the electrode terminals are arranged, the bracket is located between the battery cell group and the cover plate, the buffer member is located between the electrical connecting member and the cover plate, and the cover plate presses the electrical connecting member against the first groove through the buffer member.

In the foregoing technical solution, it is not necessary to arrange another connection to limit the bracket and the electrical connecting member in a direction in which the electrode terminals are located; and the cover plate presses the buffer member to press the electrical connecting member against the first groove, so that the electrical connecting member can be fixed to the bracket.

Optionally, a second through hole is further provided in the bottom wall of the first groove.

In the foregoing technical solution, the second through hole can reduce the mass of the bracket, and increase a proportion of the battery cell per unit mass when the battery module has particular mass, thereby improving the mass energy density of the battery using the battery module.

Optionally, a plurality of second through holes are provided, and the plurality of second through holes are arranged at intervals in the first direction.

In the foregoing technical solution, the plurality of second through holes are provided, to further reduce the mass of the bracket, thereby improving the energy density of the battery using the battery module.

Optionally, the battery module further includes end plates, and the end plates are arranged at two ends of the battery cell group in the first direction; and at least one end of the bracket in the first direction is connected to the end plate.

In the foregoing technical solution, the bracket is connected to the end plate, and the end plate limits the bracket in the first direction. In this way, it is not necessary to arrange another structure configured to mount the bracket inside the battery module, thereby reducing the space occupation inside the battery module.

Optionally, a second groove is provided in the end plate, a clamping portion is provided at the at least one end of the bracket in the first direction, and the clamping portion is clamped in the second groove.

In the foregoing technical solution, the bracket is clamped to the end plate, so that the connection structure is simple, and the assembly of the battery module is facilitated.

Optionally, a third groove is further provided in the end plate, the battery module further includes an output electrode base, the output electrode base is at least partially arranged in the third groove, and a structure of the second groove is the same as that of the third groove.

In the foregoing technical solution, the bracket is connected to the second groove in the end plate in which the output electrode base is not mounted, only the clamping portion of the bracket needs to match the second groove, and it is not necessary to additionally provide a mounting groove configured to mount the bracket on the end plate. In this way, the structure is simple, and production efficiency is improved.

Optionally, a third through hole is further provided at the at least one end of the bracket in the first direction, and the bracket is connected to the end plate by a connecting member passing through the third through hole.

In the foregoing technical solution, the third through hole is provided to connect the bracket to the end plate through the connecting member, so that the stability of the connection between the bracket and the end plate can be further improved.

Optionally, the battery module further includes a wire harness separating plate, and the bracket is connected to the wire harness separating plate or is integrally formed with the wire harness separating plate.

In the foregoing technical solution, the bracket is connected to the wire harness separating plate, or the bracket is integrally formed with the wire harness separating plate. Benefits are as follows: In one aspect, the space utilization inside the battery module is improved, and the proportion of the battery cell per unit volume is increased, thereby improving the energy density of the battery in terms of the volume. In another aspect, the bracket can be fixed without additionally arranging another connection structure, and the proportion of the battery cell per unit mass is increased, thereby improving the energy density of the battery in terms of mass.

Optionally, the bracket is bonded to the wire harness separating plate by an adhesive.

In the foregoing technical solution, the adhesive connects the bracket and the wire harness separating plate, so that the connection structure is simple, and production and manufacturing are facilitated.

Optionally, the bracket is a plastic member.

In the foregoing technology, compared with a sheet metal part, the plastic member has lighter mass, so that the proportion of the battery cell per unit mass can be increased, thereby increasing the mass energy density of the battery.

Optionally, the electrical connecting member includes a busbar and/or a wire harness.

According to a second aspect, an embodiment of this application provides a battery, including the battery module provided in the embodiment of the first aspect.

According to a third aspect, an embodiment of this application provides a power consuming device, including the battery provided in the embodiment of the second aspect, where the battery is configured to supply power to the power consuming device.

### BRIEF DESCRIPTION OF THE DRAWINGS

To describe the technical solutions in the embodiments of this application more clearly, the following briefly introduces the accompanying drawings required in the embodiments. It should be understood that, the following accompanying drawings show only some embodiments of this application, and therefore should not be considered as limiting the scope. In addition, a person of ordinary skill in the art may still derive other accompanying drawings from the accompanying drawings without creative efforts.
FIG. 1 is a schematic structural diagram of a vehicle according to some embodiments of this application;
FIG. 2 is an exploded view of a battery according to some embodiments of this application;
FIG. 3 is a schematic three-dimensional structural diagram of a battery module according to some embodiments of this application;
FIG. 4 is a partial enlarged view of a position A in FIG. 3;
FIG. 5 is a schematic structural exploded view of a bracket and an electrical connecting member according to some embodiments of this application;
FIG. 6 is a schematic three-dimensional structural diagram of a bracket according to some embodiments of this application;
FIG. 7 is a schematic structural diagram of a bracket and a binding member according to some embodiments of this application;
FIG. 8 is an exploded view of a battery module according to some embodiments of this application;
FIG. 9 is a partial schematic structural diagram of a cover plate and a buffer member according to some embodiments of this application;
FIG. 10 is a schematic three-dimensional structural diagram of a bracket and end plates according to some embodiments of this application; and
FIG. 11 is a schematic structural diagram of a bracket and a wire harness separating plate according to some embodiments of this application.

Reference numbers: 1-battery cell group; 11-battery cell; 111-electrode terminal; 12-electrical connecting member; 13-bracket; 131-first groove; 132-first through hole; 133-second through hole; 134-third through hole; 135-clamping portion; 14-binding member; 15-cover plate; 16-buffer member; 17-end plate; 171-second groove; 172-third groove; 18-output electrode base; 19-wire harness separating plate; 1000-vehicle; 200-controller; 300-motor; 100-battery; 20-box body; 21-first part; 22-second part; 23-accommodating space; 10-battery module; and X-first direction.

### DETAILED DESCRIPTION

To make the objectives, technical solutions, and advantages of the embodiments of this application clearer, the following clearly describes the technical solutions in the embodiments of this application with reference to the accompanying drawings in the embodiments of this application. Apparently, the described embodiments are some rather than all of the embodiments of this application. All other embodiments obtained by a person of ordinary skill in the art based on the embodiments of this application without creative efforts shall fall within the protection scope of this application.

Unless otherwise defined, meanings of all technical and scientific terms used in this application are the same as those usually understood by a person skilled in the art to which this application belongs. In this application, terms used in the specification of this application are only intended to describe objectives of the specific embodiments, but are not intended to limit this application. In the specification and claims of this application and the foregoing description of the accompanying drawings, the terms "include", "have", and any variant thereof are intended to cover a non-exclusive inclusion. In the specification and claims of this application or the foregoing accompanying drawings, the terms "first", "second", or the like are intended to distinguish between different objects but do not indicate a particular order or a primary-secondary relationship.

Reference to "an embodiment" in this application means that a particular feature, structure or characteristic described in combination with the embodiment may be included in at least one embodiment of this application. The term appearing at different positions of this specification may not refer to the same embodiment or an independent or alternative embodiment that is mutually exclusive with another embodiment.

In the description of this application, it should be noted that, unless otherwise explicitly specified or limited, the terms such as "mount", "connect", "connection", and "attach" should be understood in a broad sense. For example, the connection may be a fixed connection, a detachable connection, or an integral connection; or the connection may be a direct connection, an indirect connection through an intermediary, or internal communication between two components. A person of ordinary skill in the art may understand the specific meanings of the foregoing terms in this application according to specific situations.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

In the embodiments of this application, same reference numerals represent same components, and for brevity, detailed descriptions of same components are omitted in different embodiments. It should be understood that, dimensions such as a thickness, a length, and a width of various components in the embodiments of this application and dimensions such as an entire thickness, a length, and a width of an integrated device shown in the accompanying drawings are only exemplary descriptions, and should not impose any limitation to this application.

In this application, a battery cell may include, but is not limited to, a lithium metal secondary battery, a sodium metal battery, a magnesium metal battery, or the like. The battery cell may be cylindrical, flat, or in other shapes. Generally, battery cells are divided into three types according to encapsulating methods: cylindrical battery cells, prismatic battery cells, and pouch battery cells.

A battery mentioned in the embodiments of this application is a single physical module that includes a plurality of battery cells for providing higher voltage and capacity. The battery generally includes a box body for packaging the plurality of battery cells. The box body can reduce impact of liquids or other foreign objects on charging or discharging of the battery cells.

A battery module includes a plurality of battery cells, and battery modules are connected by long-sized electrical connecting members. For example, in a distribution scheme between the battery modules, a long copper bar is used for cross-tiering. To ensure current circulation, a long copper bar is also arranged in a module for current circulation. In addition, a wire harness is further connected between the battery modules, and the wire harness is electrically connected to an external component, to detect temperatures and voltages of battery cells, acquire an electric signal, and the like. The long-sized electrical connecting members pass through the plurality of battery cells, occupying space, which affects external envelope dimensions of the battery modules, and affects the energy density of the battery. In addition, the long-sized electrical connecting member is prone to damage when subjected to a large pulling force or external pressure, causing an electrical connection failure.

To improve the energy density of the battery, space inside a module becomes increasingly compact, making it difficult to arrange an electrical connecting member and a bracket inside the battery module.

In view of this, an embodiment of this application provides a battery module. The battery module includes a bracket, a groove is provided in the bracket, and the groove is configured to receive an electrical connecting member on a side of a battery cell on which electrode terminals are arranged.

The bracket receives the electrical connecting member on the side of the battery cell on which the electrode terminals are arranged, so that impact on external envelope dimensions of the battery module in other directions can be reduced.

The electrical connecting member is received in the groove, so that the space occupation of the bracket inside the battery module can be reduced, impact on the external envelope dimensions of the battery module can be reduced, impact on the size of the battery module can be reduced, and the electrical connecting member inside the battery module can be protected and supported when the external envelope dimensions of the battery module are limited. In this way, space utilization inside the battery module is improved, and a proportion of the battery cell per unit volume is increased, thereby improving the energy density of a battery using the battery module.

The technical solutions described in the embodiments of this application are applicable to a battery and a power consuming device using the battery.

The power consuming device includes, but is not limited to, a vehicle, a mobile phone, a portable device, a notebook computer, a ship, a spacecraft, an electric toy, an electric tool, and the like. The vehicle may be a fuel powered vehicle, a gas powered vehicle, or a new energy vehicle. The new energy vehicle may be a pure electric vehicle, a hybrid electric vehicle, an extended range vehicle, or the like. The spacecraft includes an airplane, a rocket, a space shuttle, a spacecraft, or the like. The electric toy includes a fixed or mobile electric toy, for example, a game console, an electric car toy, an electric ship toy, or an electric airplane toy. The electric tool includes a metal cutting electric tool, a grinding electric tool, an assembly electric tool, or a railway electric tool, for example, an electric drill, an electric wheel grinder, an electric wrench, an electric screwdriver, an electric hammer, a percussion electric drill, a concrete shaker, or an electric planer.

"A plurality of" mentioned in this application refers to two or more (including two).

For ease of description, the following embodiments are described by using an example in which the power consuming device is a vehicle 1000.

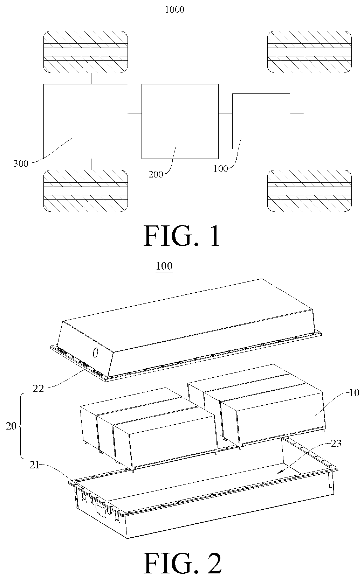

FIG. 1 is a schematic structural diagram of a vehicle 1000 according to some embodiments of this application. A battery 100 is arranged inside the vehicle 1000. The battery 100 may be arranged at the bottom, head, or tail of the vehicle 1000. The battery 100 may be configured to supply power to the vehicle 1000. For example, the battery 100 may serve as a power supply for operating the vehicle 1000.

The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of this application, the battery 100 can serve as a power supply for operating the vehicle 1000, and can also serve as a power supply for driving the vehicle 1000, to provide driving power for the vehicle 1000 in place of or partially in place of fuel or natural gas.

In some embodiments, FIG. 2 is an exploded view of a battery 100 according to some embodiments of this application. The battery 100 includes a plurality of battery cells 11. The plurality of battery cells 11 may be connected in series, in parallel, or in a series-parallel connection. The series-parallel connection means that the plurality of battery cells 11 are connected in series and connected in parallel.

In some embodiments, the battery 100 may further include a bus component (not shown in the figure). The bus component is configured to implement an electrical connection between the plurality of battery cells 11, to implement a series connection, a parallel connection, or a series-parallel connection between the plurality of battery cells 11.

The bus component may be a metal conductor, for example, copper, iron, aluminum, steel, or an aluminum alloy.

In some embodiments, the battery 100 may further include a box body 20. The box body 20 is used for accommodating the battery module 10. The box body 20 may include a first part 21 and a second part 22, and the first part 21 and the second part 22 cover each other, to define an accommodating space 23 for accommodating the battery module 10. Certainly, a connection between the first part 21 and the second part 22 may be sealed by a sealing element (not shown in the figure), and the sealing element may be a sealing ring, a sealing adhesive, or the like.

The first part 21 and the second part 22 may be in various shapes, for example, a cuboid, and a cylinder. The first part 21 may be a hollow structure open on one side, and the second part 22 may also be a hollow structure open on one side. The open side of the second part 22 covers the open side of the first part 21, so that the box body 20 having the accommodating space 23 is formed. Certainly, the first part 21 may alternatively be a hollow structure open on one side, and the second part 22 may alternatively be a plate-shaped structure. The second part 22 covers the open side of the first part 21, so that the box body 20 having the accommodating space 23 is formed.

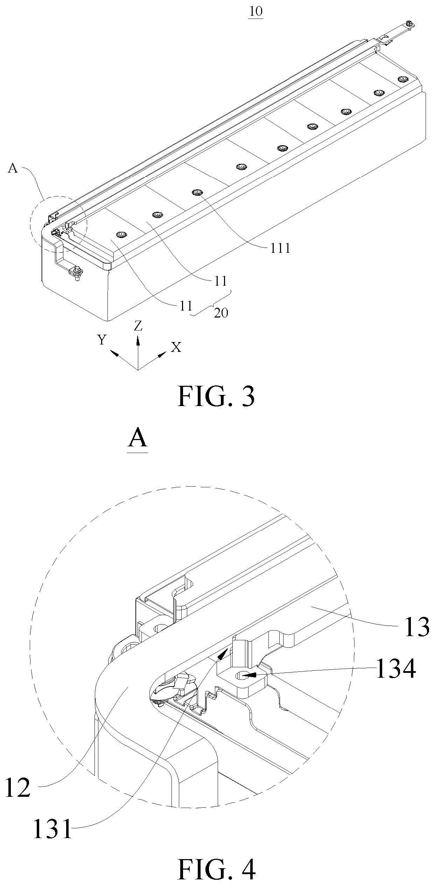

To clearly describe directions in the following embodiments, the following defines directions. By using a coordinate system in FIG. 3 as an example, a first direction X indicates an arrangement direction of the battery cells 11. For example, the first direction X is a length direction of the battery module 10. Y indicates a width direction of the battery module 10. Z indicates a direction in which electrode terminals 111 are arranged on the battery cells 11. For example, a third direction Z is a height direction of the battery module 10. The foregoing definitions are only for description and should not be construed as a limitation to this application.

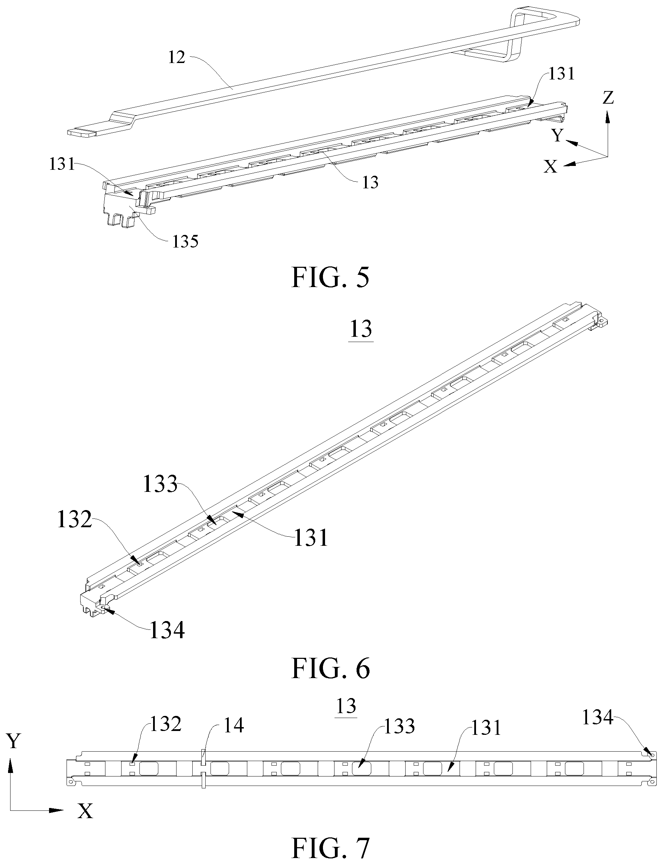

FIG. 3 is a schematic three-dimensional structural diagram of a battery module 10 according to some embodiments of this application. FIG. 4 is a partial enlarged view of a position A in FIG. 3. FIG. 5 is a schematic structural exploded view of a bracket 13 and an electrical connecting member 12 according to some embodiments of this application. FIG. 6 is a schematic three-dimensional structural diagram of a bracket 13 according to some embodiments of this application. FIG. 7 is a schematic structural diagram of a bracket 13 and a binding member 14 according to some embodiments of this application.

The battery module 10 includes a battery cell group 1, the bracket 13, the binding member 14, and the electrical connecting member 12. The battery cell group 1 includes the plurality of battery cells 11 arranged in the first direction X. Each of the battery cells 11 includes electrode terminals 111. The bracket 13 is located on a side of the battery cell group 1 on which the electrode terminals 111 are arranged. A first groove 131 extending in the first direction X is provided in the bracket 13, and a length direction of the bracket 13 is parallel to the first direction X. The electrical connecting member 12 is at least partially received in the first groove 131. First through holes 132 are provided in a bottom wall of the first groove 131. The battery module 10 further includes the binding member 14. The binding member 14 passes through the first through holes 132 and binds and fixes the electrical connecting member 12 to the bracket 13.

A prismatic battery 100 is used as an example. The plurality of battery cells 11 are arranged in the first direction X, and the first direction X may be a thickness direction of the battery cells 11 (for example, the direction X shown in FIG. 3) or a width direction of the battery cells 11 (for example, the direction Y shown in FIG. 3).

The electrical connecting member 12 is a component that is in the battery module 10 and that is connected to the battery cells 11 to conduct an electric signal.

The bracket is a component that passes through the plurality of battery cells 11 in the first direction X to protect the electrical connecting member 12. As shown in FIG. 3 and FIG. 5, the bracket 13 may be an elongated shape extending in the first direction X.

The first groove 131 is a groove-like structure configured to accommodate the electrical connecting member 12. The bracket 13 may protect the electrical connecting member 12 received in the first groove 131.

A side wall of the first groove 131 may be perpendicular to a bottom wall of the first groove 131, to form a U-shape. Alternatively, the side wall and the bottom wall of the first groove 131 may have an angle, to form a trapezoid.

One first groove 131 may be provided, or a plurality of first grooves 131 may be arranged side by side in a width direction of the first grooves 131 (for example, the direction Y shown in FIG. 3 and FIG. 5). For example, two first grooves 131 are provided. In this case, a cross-sectional shape of each of the first grooves 131 may be an M-shape.

The electrical connecting member 12 may be entirely received in the first groove 131, or may be only partially received in the first groove 131.

A plurality of first through holes 132 may be provided, and the plurality of first through holes 132 are arranged in the first direction X. Generally, when the battery module 10 is used, one end of the battery cell 11 on which the electrode terminals 111 are arranged faces upward. To improve the space utilization inside the battery module, optimize external envelope dimensions of the battery module 10, improve energy density of the battery 100 using the battery module 10, and reduce a dimension in a transverse direction, in the embodiments, through the bracket 13, the electrical connecting member 12 is arranged on the side of the battery cell 11 on which the electrode terminals 111 are arranged, so that impact on external envelope dimensions of the battery module 10 in other directions can be reduced.

In addition, the bracket 13 in this embodiment constrains the electrical connecting member 12 through the side wall and the bottom wall of the first groove 131 to protect the electrical connecting member 12, so that impact of the bracket 13 on a dimension of the side of the battery cell 11 on which the electrode terminals 111 are arranged is reduced, which is applicable to mounting in the battery module 10 when a dimension in the direction in which the electrode terminals 111 are located is limited. In this way, the space utilization inside the battery module 10 is improved, and a proportion of the battery cell 11 per unit volume is increased, thereby improving the energy density of the battery 100 using the battery module 10.

In addition, the first through holes 132 are provided at the bottom of the first groove 131, and the binding member 14 passes through the first through holes 132 and binds the electrical connecting member 12 to the bottom wall, so that a possibility of damage to the electrical connecting member 12 can be further reduced.

Further, the bracket 13 may further have a function of a press strip. For example, the plurality of battery cells 11 are pressed in the first direction X by the bracket 13, and an additional press strip may be omitted inside the battery module 10.

An example in which the electrode terminals 111 are located in the height direction Z of the battery module 10 is used. The electrical connecting member 12 is also arranged in the height direction. Because the electrical connecting member 12 has occupied a height in the height direction, compared with the bracket 13 of another structure, the bracket 13 receives the electrical connecting member 12 through the first groove 131. In this way, an external envelope is formed by the electrical connecting member 12 in the height direction, so that impact of the bracket 13 on an external envelope dimension of the battery module 10 in the height direction can be reduced.

In some embodiments, the first groove 131 is provided on a side of the bracket 13 facing away from the battery cell group 1.

It may be understood that, a notch of the first groove 131 faces a position facing away from the battery cell group 1. For example, in FIG. 3, the bracket 13 is located above the battery cell group 1, and the bracket 13 is located between the electrical connecting member 12 and the battery cell group 1. In this case, the notch of the first groove 131 faces upward.

The first groove 131 is provided on the side of the bracket 13 facing away from the battery cell group 1, and the bottom wall of the first groove 131 is configured to support the electrical connecting member 12 in a direction facing away from the battery cell group 1, thereby reducing the possibility of damage to the electrical connection.

Certainly, in other embodiments, the first groove 131 may alternatively be arranged on a side of the bracket 13 facing the battery cell group 1. In this case, the notch of the first groove 131 faces the battery cell group 1.

In some embodiments, the electrical connecting member 12 extends in the first groove 131 in the first direction X. It may be understood that, an extension direction of the electrical connecting member 12 in the first groove 131 is the same as an extension direction of the first groove 131.

The electrical connecting member 12 extends in the first groove 131 in the first direction X, so that the electrical connecting member 12 fits snugly into the first groove 131, thereby improving the protection of the electrical connecting member 12 by the bracket 13, and reducing the possibility of damage to the electrical connecting member 12.

In other embodiments, if a groove width of the first groove 131 (for example, the direction Y shown in FIG. 3) is greater than a dimension of the electrical connecting member 12 in a groove width direction of the first groove 131, the electrical connecting member 12 may partially bend or serpentine in the first groove 131, and does not necessarily extend in the first groove 131 in the first direction X.

In some embodiments, referring to FIG. 7, the first through holes 132 are arranged in pairs, and the binding member 14 passes through two first through holes 132 arranged in a pair.

It may be understood that, two first through holes 132 are provided.

The two first through holes 132 may be spaced apart from each other in the width direction of the first groove 131 (a direction Y shown in FIG. 7), and the binding member 14 passes through the two first through holes 132 to bind a wire harness.

The two first through holes 132 may alternatively be diagonally arranged. For example, an angle exists between a connecting line between the two first through holes 132 and the square Y.

The first through holes 132 are arranged in pairs, so that the binding member 14 can be positioned. In addition, a large number of holes are provided, so that the mass of the bracket 13 can be reduced, and a proportion of the battery cell 11 per unit mass can be increased, thereby helping improve the energy density of the battery 100 using the battery module 10.

Optionally, the binding member 14 may be a cable tie.

In some embodiments, a second through hole 133 is further provided in the bottom wall of the first groove 131. The second through hole 133 can reduce the mass of the bracket 13, and increase the proportion of the battery cell 11 per unit mass, thereby improving the mass energy density of the battery 100 using the battery module 10.

A shape of the second through hole 133 may be, but is not limited to, a rectangle, a circle, a waist, an ellipse, or the like.

In some embodiments, a plurality of second through holes 133 are provided, and the plurality of second through holes 133 are arranged at intervals in the first direction X.

The plurality of second through holes 133 are provided, so that the mass of the bracket 13 can be further reduced, and the proportion of the battery cell 11 per unit mass can be further increased, thereby further improving the mass energy density of the battery 100 using the battery module 10.

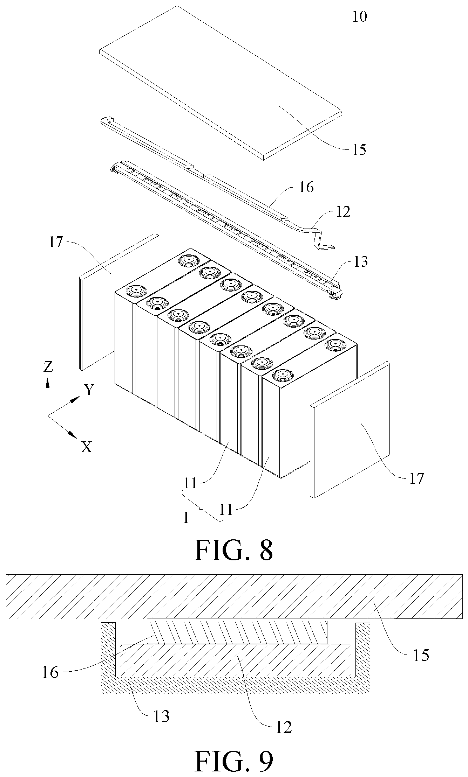

In some embodiments, FIG. 8 is an exploded view of a battery module 10 according to some embodiments of this application. FIG. 9 is a partial schematic structural diagram of a cover plate 15 and a buffer member 16 according to some embodiments of this application. The battery module 10 further includes the buffer member 16 and the cover plate 15, the cover plate 15 is located on the side of the battery cell group 1 on which the electrode terminals 111 are arranged, the bracket 13 is located between the battery cell group 1 and the cover plate 15, the buffer member 16 is located between the electrical connecting member 12 and the cover plate 15, and the cover plate 15 presses the electrical connecting member 12 against the first groove 131 through the buffer member 16.

The buffer member 16 is a component that can be compressed under pressure and that tends to restore the original shape.

The buffer member 16 may be foam, rubber, or the like, and the buffer member 16 may be bonded to the electrical connecting member 12. An example in which the electrical connecting member 12 is a copper bar is used. The foam may be bonded to the copper bar, and the cover plate 15 presses the foam so that the copper bar can be pressed against the first groove 131.

In the embodiments, it is not necessary to arrange another connection to limit the bracket 13 and the electrical connecting member 12 in a direction in which the electrode terminals 111 are located; and the cover plate 15 presses the buffer member 16 to press the electrical connecting member 12 against the first groove 131, so that the electrical connecting member 12 can be fixed to the bracket 13.

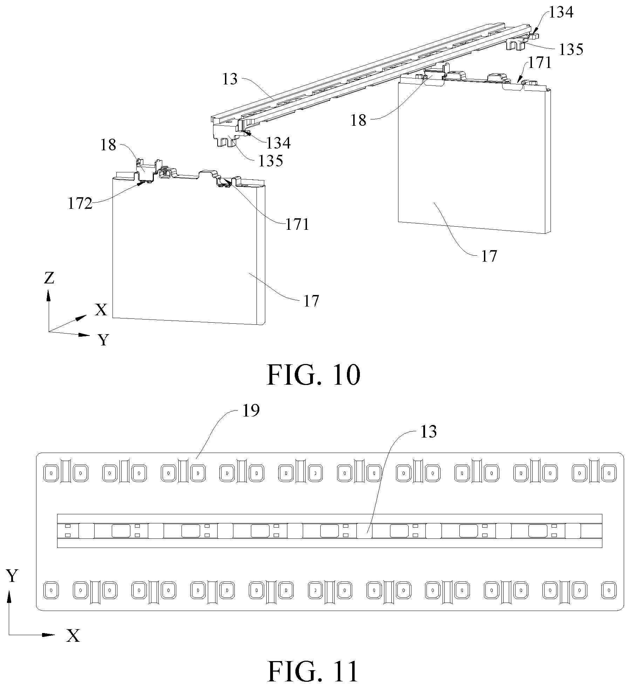

In some embodiments, referring to FIG. 8 and FIG. 10, FIG. 10 is a schematic three-dimensional structural diagram of a bracket 13 and end plates 17 according to some embodiments of this application. The battery module 10 further includes the end plates 17, and the end plates 17 are arranged at two ends of the battery cell group 1 in the first direction X. At least one end of the bracket 13 in the first direction X is connected to the end plate 17.

Only one end of the first bracket 13 may be connected to the first end plate 17 in the first direction X, or two ends of the first bracket 13 in the first direction X may be connected to the first end plates 17.

In the embodiments, the bracket 13 is connected to the end plate 17, and the end plate 17 limits the bracket 13 in the first direction X. In this way, it is not necessary to arrange another structure configured to mount the bracket 13 inside the battery module 10, thereby reducing the space occupation inside the battery module 10.

In some embodiments, referring to FIG. 10, a second groove 171 is provided in the end plate 17, a clamping portion 135 is provided at the at least one end of the bracket 13 in the first direction X, and the clamping portion 135 is clamped in the second groove 171.

In an embodiment in which one end of the bracket 13 is connected to the end plate 17, the clamping portion 135 is provided at the end of the bracket 13. In an embodiment in which two ends of the bracket 13 are connected to the end plates 17, clamping portions 135 are provided at the two ends of the bracket 13.

The end plate 17 is configured to press the battery cell group 1 in the first direction X, and the bracket 13 is clamped to the end plate 17, so that the connection structure is simple, and the assembly of the battery module 10 is facilitated.

In some embodiments, still referring to FIG. 10, a third groove 172 is further provided in the end plate 17, the battery module 10 further includes an output electrode base 18, the output electrode base 18 is at least partially arranged in the third groove 172, and a structure of the second groove 171 is the same as that of the third groove 172.

It may be understood that, two grooves are provided in the end plate 17. In the embodiments, the groove configured to mount the output electrode base 18 is defined as the third groove 172, and the groove in which the output electrode bottom mounting base is not mounted is defined as the second groove 171. The second groove 171 may be configured to cooperate with and be clamped to the clamping portion 135 of the bracket 13.

The output electrode bottom mounting base is configured to perform insulating protection on an output electrode (not shown in the figure) of the battery module 10. The output electrode base 18 is mounted on the end plate 17, and the output electrode of the battery module 10 is mounted on the output electrode base 18, to transmit an electric signal inside the battery module 10 to the outside of the battery module 10 through the output electrode.

Because a production process of the mounting groove of the output electrode base 18 is symmetric production, and for ease of actual use of the end plate 17, generally, two grooves are provided in the end plate 17, and the two grooves may both be configured to mount the output electrode base 18.

Referring to FIG. 10, for the battery module 10 in which a positive electrode and a negative electrode are on opposite sides, one output electrode base 18 is mounted on each end plate 17, each end plate 17 has one remaining groove (that is, the second groove 171), and the remaining groove may be configured to clamp the bracket 13.

The bracket 13 is connected to the second groove 171 in the end plate 17 in which the output electrode base 18 is not mounted, only the clamping portion 135 of the bracket 13 needs to match the second groove 171, and it is not necessary to additionally provide a mounting groove configured to mount the bracket 13 on the end plate 17. In this way, the structure is simple, and production efficiency is improved.

In other embodiments, for example, for the battery module 10 in which the positive electrode and the negative electrode are on the same side, two grooves in the end plate 17 at one end of the battery module 10 are configured to mount output electrode bases 18, and two grooves in the end plate 17 at the other end of the battery module 10 are not used. In this case, the bracket 13 may be connected by the unused groove. One end of the bracket 13 is clamped in the unused groove.

In some embodiments, referring to FIG. 7 and FIG. 10, a third through hole 134 is further provided at the at least one end of the bracket 13 in the first direction X, and the bracket 13 is connected to the end plate 17 by a connecting member passing through the third through hole 134.

In an embodiment in which one end of the bracket 13 in the first direction X is connected to the end plate 17, the third through hole 134 may be provided at the end of the bracket 13 connected to the end plate 17. In an embodiment in which two ends of the bracket 13 in the first direction X are connected to the end plates 17, third through holes 134 may be provided at the two ends of the bracket 13.

Further, the third through hole 134 may be provided in the clamping portion 135.

The third through hole 134 is provided to connect the bracket 13 to the end plate 17 by the connecting member, so that the stability of the connection between the bracket 13 and the end plate 17 can be further improved.

In some embodiments, FIG. 11 is a schematic structural diagram of a bracket 13 and a wire harness separating plate 19 according to some embodiments of this application. The battery module 10 further includes the wire harness separating plate 19, and the bracket 13 is connected to the wire harness separating plate 19 or is integrally formed with the wire harness separating plate 19.

The wire harness separating plate 19 is configured to separate a top structure of the battery cell group 1 from the side of the battery cell group 1 on which the electrode terminals 111 are arranged, to delay thermal runaway.

The bracket 13 is connected to the wire harness separating plate 19 or is integrally formed with the wire harness separating plate 19. Benefits are as follows: In one aspect, the space utilization inside the battery module 10 is improved, and the proportion of the battery cell 11 per unit volume is increased, thereby improving the energy density of the battery 100 in terms of the volume. In addition, the bracket 13 can be fixed without additionally arranging another connection structure, and the proportion of the battery cell 11 per unit mass is increased, thereby improving the energy density of the battery 100 in terms of mass.

Optionally, the bracket 13 is bonded to the wire harness separating plate 19 by an adhesive.

It should be noted that, in an embodiment in which the bracket 13 is arranged on the wire harness separating plate 19, clamping portions 135 clamped to the end plates 17 may also be arranged at the two ends of the bracket 13 in the first direction X.

In some embodiments, the bracket 13 is a plastic member, for example, a polypropylene (PP) member.

Compared with a sheet metal part, the plastic member has lighter mass, so that the proportion of the battery cell 11 per unit mass can be increased, thereby increasing the mass energy density of the battery 100.

The bracket 13 is an insulating member, which can protect the electrical connecting member 12 and also provides insulation, thereby reducing a risk of a short circuit inside the battery module 10.

In some embodiments, the electrical connecting member 12 includes a busbar and/or a wire harness.

The busbar may be a copper bar, an aluminum bar, or the like. For example, a long copper bar is prone to bending or fracture when subjected to external pressing or vibration. The long copper bar is received in the groove of the bracket 13, so that a possibility of damage to the long copper bar can be reduced.

The wire harness may be a low-voltage wire harness used for signal acquisition in the battery module 10. During use of the battery module 10, the wire harness is prone to damage under pulling, causing an electrical connection failure. The wire harness is received in the groove of the bracket 13, so that a possibility of damage to the wire harness can be reduced.

An embodiment of this application provides a battery 100, including the battery module 10 provided in the foregoing embodiments.

An embodiment of this application further provides a power consuming device, including the battery 100 provided in the foregoing embodiment. The battery 100 is configured to supply power to the power consuming device, and the power consuming device may be a vehicle 1000.

An embodiment of this application provides a battery module 10. The battery module 10 includes a battery cell group 1, an electrical connecting member 12, end plates 17, a cover plate 15, a buffer member 16, and a bracket 13. The battery cell group 1 includes a plurality of battery cells 11 arranged in a first direction X. Each of the battery cells 11 includes electrode terminals 111. The bracket 13 is located on a side of the battery cell group 1 on which the electrode terminals 111 are arranged. A first groove 131 extending in the first direction X is provided in the bracket 13. The electrical connecting member 12 is at least partially received in the first groove 131. The end plates 17 are arranged at two ends of the battery cell group 1 in the first direction X. A second groove 171 is provided in the end plate 17, a clamping portion 135 is provided at at least one end of the bracket 13 in the first direction X, and the clamping portion 135 is clamped in the second groove 171. The cover plate 15 is located on the side of the battery cell group 1 on which the electrode terminals 111 are arranged, the bracket 13 is located between the battery cell group 1 and the cover plate 15, the buffer member 16 is located between the electrical connecting member 12 and the cover plate 15, and the cover plate 15 presses the electrical connecting member 12 against the first groove 131 through the buffer member 16.

An embodiment of this application provides a battery module 10. The battery module 10 includes a battery cell group 1, an electrical connecting member 12, a wire harness separating plate 19, a cover plate 15, a buffer member 16, and a bracket 13. The battery cell group 1 includes a plurality of battery cells 11 arranged in a first direction X. Each of the battery cells 11 includes electrode terminals 111. The bracket 13 is located on a side of the battery cell group 1 on which the electrode terminals 111 are arranged. A first groove 131 extending in the first direction X is provided in the bracket 13. The electrical connecting member 12 is at least partially received in the first groove 131. The bracket 13 is connected to the wire harness separating plate 19 or is integrally formed with the wire harness separating plate 19. The cover plate 15 is located on the side of the battery cell group 1 on which the electrode terminals 111 are arranged, the bracket 13 is located between the battery cell group 1 and the cover plate 15, the buffer member 16 is located between the electrical connecting member 12 and the cover plate 15, and the cover plate 15 presses the electrical connecting member 12 against the first groove 131 through the buffer member 16.

It should be noted that, the embodiments in this application and features in the embodiments may be combined with each other without causing a conflict.

The foregoing embodiments are only used for describing the technical solutions of this application and are not intended to limit this application. For a person skilled in the art, this application may have various modifications and changes. Any modification, equivalent replacement, or improvement made within the spirit and principle of this application shall fall within the protection scope of this application.

## Claims

1. A battery module, comprising:
a battery cell group, comprising a plurality of battery cells arranged in a first direction, wherein each of the battery cells comprises electrode terminals;
a bracket, located on a side of the battery cell group on which the electrode terminals are arranged, wherein a first groove extending in the first direction is provided in the bracket, and a length direction of the bracket is parallel to the first direction;
an electrical connecting member, at least partially received in the first groove; and
a binding member, wherein first through holes are provided in a bottom wall of the first groove, and the binding member passes through the first through holes and binds and fixes the electrical connecting member to the bracket.

2. The battery module according to claim 1, wherein the first groove is provided on a side of the bracket facing away from the battery cell group.

3. The battery module according to claim 1 or 2, wherein the electrical connecting member extends in the first groove in the first direction.

4. The battery module according to any one of claims 1 to 3, wherein the first through holes are arranged in pairs, and the binding member passes through two first through holes arranged in a pair.

5. The battery module according to any one of claims 1 to 4, wherein the battery module further comprises a buffer member and a cover plate, the cover plate is located on the side of the battery cell group on which the electrode terminals are arranged, the bracket is located between the battery cell group and the cover plate, the buffer member is located between the electrical connecting member and the cover plate, and the cover plate presses the electrical connecting member against the first groove through the buffer member.

6. The battery module according to any one of claims 1 to 5, wherein a second through hole is further provided in the bottom wall of the first groove.

7. The battery module according to claim 6, wherein a plurality of second through holes are provided, and the plurality of second through holes are arranged at intervals in the first direction.

8. The battery module according to any one of claims 1 to 7, wherein the battery module further comprises end plates, and the end plates are arranged at two ends of the battery cell group in the first direction; and
at least one end of the bracket in the first direction is connected to the end plate.

9. The battery module according to claim 8, wherein a second groove is provided in the end plate, a clamping portion is provided at the at least one end of the bracket in the first direction, and the clamping portion is clamped in the second groove.

10. The battery module according to claim 9, wherein a third groove is further provided in the end plate, the battery module further comprises an output electrode base, the output electrode base is at least partially arranged in the third groove, and a structure of the second groove is the same as that of the third groove.

11. The battery module according to any one of claims 8 to 10, wherein a third through hole is further provided at the at least one end of the bracket in the first direction, and the bracket is connected to the end plate by a connecting member passing through the third through hole.

12. The battery module according to any one of claims 1 to 7, wherein the battery module further comprises a wire harness separating plate, and the bracket is connected to the wire harness separating plate or is integrally formed with the wire harness separating plate.

13. The battery module according to any one of claims 1 to 7, wherein the battery module further comprises a wire harness separating plate, and the bracket is bonded to the wire harness separating plate by an adhesive.

14. The battery module according to any one of claims 1 to 13, wherein the bracket is a plastic member.

15. The battery module according to any one of claims 1 to 14, wherein the electrical connecting member comprises a busbar and/or a wire harness.

16. A battery, comprising the battery module according to any one of claims 1 to 15.

17. A power consuming device, comprising the battery according to claim 16, wherein the battery is configured to supply power to the power consuming device.
